# FASCICULE DE BREVET EUROPEEN

(11) **EP 1 633 900 B1**
(45) Date de publication et mention de la délivrance du brevet: **03.06.2009**
(21) Numéro de dépôt: 04767372.8
(22) Date de dépôt: 17.06.2004
(51) Int. Cl.: C22C 21/08, C22C 21/14, C22C 21/16

(54) **PAVILLON DE TOIT DE CARROSSERIE D'AUTOMOBILE EN TOLE D'ALLIAGE AL-SI-MG FIXEE SUR UN CADRE EN ACIER**
DACH EINES KRAFTFAHRZEUGS AUS EINEM AN EINEM STAHLRAHMEN BEFESTIGTEN BLECH AUS EINER AL-SI-MG-LEGIERUNG
ROOF TOP OF A CAR BODY MADE OF AN AL-SI-MG SHEET METAL ALLOY FIXED TO A STEEL FRAME

(30) Priorité: 18.06.2003 FR 0307370
(43) Date de publication de la demande: 15.03.2006
(73) Titulaire: ALCAN RHENALU, 75116 Paris (FR)
(72) Inventeur: BOUET-GRIFFON, Myriam, F-38610 Venon (FR); GUIGLIONDA, Gilles, F-38100 Grenoble (FR); SHAHANI, Ravi, F-68280 Andolsheim (FR); GAVOILLE, Pierre, F-68100 Mulhouse (FR); DERMARKAR, Salim, F-68000 Colmar (FR); RAYNAUD, Guy, Michel, F-38500 Voiron (FR)
(74) Mandataire: Fénot, Dominique
(86) Numéro de dépôt international: PCT/FR2004/001511
(87) Numéro de publication internationale: WO 2004/113579

(56) Documents cités:
- EP-A- 0 173 632
- EP-A- 1 143 027
- WO-A-96/12829
- FR-A- 2 748 035
- US-A- 4 082 578
- US-A- 4 424 084
- US-A- 5 888 320
- PATENT ABSTRACTS OF JAPAN vol. 2002, no. 04, 4 août 2002 (2002-08-04) & JP 2001 342577 A (NIPPON STEEL CORP; MITSUI TAKEDA CHEMICALS INC), 14 décembre 2001 (2001-12-14) -& DATABASE WPI Derwent Publications Ltd., London, GB; AN 2002-320592 XP002273896 -& JP 2001 342577 A (MITSUI TAKEDA CHEMICALS INC; NIPPON STEEL CORP) 14 décembre 2001 (2001-12-14)
- PATENT ABSTRACTS OF JAPAN vol. 1995, no. 04, 31 mai 1995 (1995-05-31) & JP 7 018390 A (FURUKAWA ELECTRIC CO LTD:THE; others: 01), 20 janvier 1995 (1995-01-20) -& DATABASE WPI Derwent Publications Ltd., London, GB; AN 1995-094189 XP002273897 -& JP 07 018390 A (KAWASAKI STEEL CO; FURUKAWA ELECTRIC CO LTD) 20 janvier 1995 (1995-01-20)
- PATENT ABSTRACTS OF JAPAN vol. 2002, no. 06, 4 juin 2002 (2002-06-04) & JP 2002 047580 A (NIPPON STEEL CORP), 15 février 2002 (2002-02-15) -& DATABASE WPI Derwent Publications Ltd., London, GB; AN 2002-438483 XP002273898 -& JP 2002 047580 A (NIPPON STEEL CORP) 15 février 2002 (2002-02-15)

## Description

### Domaine de l'invention

L'invention concerne le domaine des pièces de peau de carrosserie de voitures, plus particulièrement les pavillons de toit, rapportées sur une structure en acier, réalisées à partir de tôles en alliage Al-Si-Mg, de la série 6000 selon la désignation de l'Aluminum Association.

### Etat de la technique

L'aluminium est utilisé de manière croissante dans la construction automobile pour réduire le poids des véhicules et ainsi réduire la consommation de carburant et les rejets de polluants et de gaz à effets de serre. Plutôt que d'aboutir directement à une caisse en blanc complètement en aluminium, on n'utilise souvent l'aluminium que pour certaines parties de la carrosserie. Ainsi, il est maintenant courant de trouver des ouvrants en aluminium, tels que des capots ou des portes, associés à des structures acier. Les alliages couramment utilisés pour ces applications sont le 6016 en Europe et le 6111 aux Etats-Unis.

Il s'agit dans ce cas de pièces rapportées, en général à l'aide de charnières, à la caisse acier. On trouve également des pavillons rapportés après peinture. Il est moins courant de trouver des pièces en aluminium assemblées à des éléments de structure acier au cours du ferrage et avant traitement de cataphorèse, même si quelques pièces comme des renforts de portes ou des façades avant existent aujourd'hui. Ces pièces sont en général de petites dimensions, et le problème de dilatation différentielle entre l'aluminium et l'acier au cours de traitements thermiques de cataphorèse ou de cuisson des peintures est négligeable. Par ailleurs ces pièces ne constituent pas des pièces d'aspect.

Il existe aujourd'hui une forte demande pour utiliser des pièces de grande dimension, par exemple des pavillons de toit en alliage d'aluminium fixés sur structure acier avant peinture. En plus des propriétés habituelles exigées des alliages de peau, à savoir:
- une formabilité élevée pour les opérations d'emboutissage et de sertissage,
- une limite d'élasticité contrôlée à l'état de livraison de la tôle pour maîtriser le retour élastique,
- une résistance mécanique élevée après cuisson des peintures pour obtenir une bonne résistance à l'indentation tout en minimisant le poids de la pièce,
- une bonne résistance à la corrosion, notamment la corrosion filiforme, de la pièce peinte,
- une bonne qualité de surface après mise en forme et peinture,
- un bon comportement dans les divers procédés d'assemblage utilisés en carrosserie automobile tels que le soudage par points, le soudage laser, le collage, le clinchage ou le rivetage,
- une compatibilité avec les exigences du recyclage des déchets de fabrication ou des véhicules recyclés,
- un coût acceptable pour une production en grande série,
   l'utilisation de telles pièces exige en plus d'éviter les déformations permanentes visibles dues à la dilatation différentielle entre l'aluminium et l'acier au cours des opérations de cataphorèse et cuisson des peintures.

### Objet de l'invention

Le but de la présente invention définie à la revendication 1 est de fournir des tôles en alliage d'aluminium pour peau de carrosserie automobile présentant une composition adaptée au recyclage, une formabilité suffisante et un faible lignage pour emboutissage profond en conditions sévères, une résistance élevée à l'indentation, tout en maîtrisant le retour élastique, une bonne aptitude au collage, une découpe sans formation de paillettes, une bonne résistance à la corrosion filiforme et surtout un comportement amélioré par rapport à l'art antérieur en déformation résiduelle après cataphorèse.

L'invention a pour objet un pavillon de toit de carrosserie de voiture comportant au moins une pièce en alliage de la composition définie à la revendication 1 fixée avant peinture sur une pièce en acier.

L'alliage d'aluminium présente après mise en solution, trempe et maturation de 3 semaines à température ambiante, une limite d'élasticité R_{0.2} inférieure à 170 MPa, et de préférence à 160 MPa. La limite d'élasticité à chaud de la pièce emboutie au début du traitement thermique correspondant à la cuisson des peintures (après montée en température) est supérieure à 160 MPa, et supérieure à 200 MPa à la fin de la cuisson, la limite d'élasticité à froid étant alors supérieure à 220 MPa.
L'alliage contient de préférence de 0,7 à 1% Si, de 0,8 à 1,1% Cu, de 0,45 à 0,6% Mn, de 0,6 à 0,9% Mg, de 0,1 à 0,7% Zn, et plus préférentiellement de 0,15 à 0,3% Zn.

### Description des figures

La figure 1 représente, en perspective, le cadre acier simulant une caisse de voiture, utilisé pour mesurer les déformations induites par la dilatation différentielle d'un pavillon en alliage d'aluminium fixé sur ce cadre.
La figure 2 représente le profil de déformation après traitement de cataphorèse du pavillon en différents alliages fixé sur le cadre acier.

### Description de l'invention

La composition mentionnée ci-dessus correspond à celle de l'alliage 6056, enregistré à l'Aluminum Association en 1988. Elle correspond approximativement à la composition du produit filé, matricé ou éventuellement laminé décrit dans le brevet EP 0173632 de Cegedur Pechiney. La description et les exemples de ce brevet ne concernent que l'application aux produits filés. Cet alliage a également été proposé pour des tôles destinées au fuselage d'avions commerciaux, comme mentionné dans les brevets EP 0787217 et EP 1143027 au nom de la demanderesse. Son utilisation comme alliage de peau de carrosserie automobile n'a jamais été envisagée.

Le document US-A-4 082 578 divulgue une pièce de peau de carrosserie de voiture présentant une pièce de peau en alliage d'aluminium fixée sur un cadre en acier.

La demanderesse a constaté que, de manière inattendue, l'utilisation d'un alliage du type 6056 permettait de réduire de manière significative les inconvénients liés à la différence de dilatation avec l'acier.

La composition de l'alliage 6056 diffère notamment de celle de l'alliage 6111 par une teneur plus élevée en manganèse et par une addition éventuelle de zinc.

La demanderesse a constaté que l'augmentation de la teneur en manganèse au-delà de 0,4% entraînait une augmentation de la limite d'élasticité à la température du traitement de cataphorèse (typiquement de l'ordre de 190°C), au-dessus de 200 MPa à la fin du traitement dont la durée est de l'ordre de 20 mn, ceci pour des tôles d'épaisseur comprise entre 0,8 et 1 mm. Ainsi la pièce selon l'invention conserve un comportement plus élastique à la déformation, ce qui réduit l'apparition de plis ou autres défauts dus à la différence de dilatation entre l'acier et l'alliage d'aluminium.

Par ailleurs, les tôles en 6056 présentent une limite d'élasticité plus faible à l'état T4 que les tôles en 6111, typiquement inférieure à 170 MPa, voire 160 MPa, pour des tôles d'épaisseur comprise entre 0,8 et 1,2 mm, ce qui leur confère une meilleure formabilité. Par contre, la limite d'élasticité est plus élevée après le traitement de cuisson des peintures, typiquement plus de 220 MPa, ce qui améliore la résistance à l'indentation, ou permet une réduction des épaisseurs à résistance égale.

De manière surprenante, les tôles en 6056, bien qu'étant plus dures à l'état T4, présentent une formabilité équivalente à celle des tôles en 6016.

L'addition de 0,1 à 0,7% de zinc contribue à une amélioration de la résistance à la corrosion filiforme de la pièce peinte, notamment par rapport à l'alliage 6111.

Le procédé de fabrication des tôles destinées aux pièces selon l'invention comporte typiquement la coulée d'une plaque, éventuellement le scalpage de cette plaque, et son homogénéisation ou un simple réchauffage à une température comprise entre 400 et 570°C d'une durée entre 6 et 24 h. La bande laminée à chaud est ensuite laminée à froid jusqu'à l'épaisseur finale, avec éventuellement un recuit intermédiaire à une température comprise entre 300 et 450°C s'il est effectué en four batch, ou entre 350 et 570°C s'il est effectué en continu. La dernière passe de laminage à froid peut être effectuée avec un cylindre texturé, par exemple par traitement par faisceau d'électrons (EBT), par électro-érosion (EDT) ou par faisceau laser, ce qui améliore la formabilité et l'aspect de surface de la pièce formée après peinture.

Il est également possible d'utiliser des bandes obtenues directement par coulée continue, soit entre deux cylindres, soit entre deux courroies, et d'effectuer le laminage à froid et les opérations ultérieures dans les mêmes conditions.

La mise en solution se fait à une température au-delà de la température de solvus de l'alliage, tout en évitant la brûlure. La tôle mise en solution est ensuite trempée, généralement à l'eau froide ou à l'air. Elle peut subir, juste après la trempe, un traitement de prérevenu à une température comprise entre 50 et 150°C, destiné à améliorer la réponse au durcissement lors de la cuisson des peintures.

La tôle est le plus souvent stockée à ce stade pendant un temps plus ou moins long, ce qui conduit à une maturation naturelle qui fait augmenter la limite d'élasticité au fil du temps. Après 3 semaines de maturation, les tôles des pièces selon l'invention présentent, à une épaisseur de l'ordre de 0,9 à 1 mm, une limite d'élasticité de l'ordre de 150 MPa, et reste toujours en dessous de 170 MPa, voire 160 MPa,. La tôle peut être, avant mise en forme, revêtue d'un lubrifiant, huile ou lubrifiant sec, adapté à l'emboutissage, l'assemblage et le traitement de surface de la pièce à réaliser.

La pièce de peau de carrosserie est généralement réalisée par découpe d'un flan dans la tôle, emboutissage de ce flan et détourage à la presse. D'une manière surprenante, les tôles en alliage 6056 des pièces selon l'invention présentent après emboutissage un meilleur état de surface que celui des tôles en 6016 ou en 6111 produites selon la même gamme de fabrication, notamment par absence de défaut de lignage. La présence d'un recuit intermédiaire au cours du laminage à froid a également un effet favorable sur la réduction du lignage.

Après emboutissage la pièce est assemblée à la caisse en acier avant de recevoir une ou plusieurs couches de peinture, avec pour chacune une étape de cuisson. L'étape critique est la cuisson de la couche de cataphorèse, qui se fait généralement à une température comprise entre 150 et 200°C, pendant 15 à 30 mn, la montée en température se faisant en quelques minutes. A la température de la cataphorèse, les tôles embouties des pièces suivant l'invention présentent une limite élastique de l'ordre de 170 MPa au début du traitement de cuisson et de l'ordre de 220 MPa à la fin, alors que celle des alliages de type 6016 utilisés habituellement en Europe pour les peaux de carrosserie est comprise entre 100 et 130 MPa au début et entre 130 et 160 MPa à la fin. Elle est également plus élevée d'environ 15% que celle du 6111 utilisé en Amérique du Nord.

Mesurée à froid, la limite élastique peut atteindre 250 MPa suivant l'invention, contre 170 à 200 MPa pour les tôles de peau classiques en 6016, et elle dépasse largement celle du 6111.

Les pièces selon l'invention présentent également après peinture une bonne résistance à la corrosion filiforme, meilleure que celle des alliages sans manganèse ni zinc comme l'alliage 6111.

### Exemples

### Exemple 1

On a coulé en plaques d'épaisseur 500 mm 4 alliages représentant 2 alliages A et B de type 6016 couramment utilisés en Europe pour des pièces de peau de carrosserie, un alliage de type 6111 et un alliage 6056 pour fabriquer des pièces selon l'invention. Les compositions en % en poids sont indiquées au tableau 1 :

**Tableau 1**

| | Si | Fe | Cu | Mn | Mg | Cr | Zn |
|---|---|---|---|---|---|---|---|
| A | 1,00 | 0,28 | 0,12 | 0,11 | 0,30 | 0,03 | |
| B | 1,03 | 0,29 | 0,17 | 0,17 | 0,42 | 0,04 | |
| 6111 | 0,63 | 0,11 | 0,69 | 0,17 | 0,78 | 0,07 | |
| 6056 | 0,85 | 0,07 | 1,0 | 0,45 | 0,75 | 0,02 | 0,16 |

Les plaques ont été scalpées, homogénéisées 10 h à 570°C, puis laminées à chaud directement sur chaleur d'homogénéisation, d'abord sur un laminoir réversible, puis sur un laminoir tandem. La température de début de laminage était de l'ordre de 540°C, la température de bobinage de la bande à chaud de l'ordre de 310°C. Les bandes ont été ensuite laminées à froid avec un recuit intermédiaire jusqu'à l'épaisseur de 1 mm, puis mises en solution à une température de 570°C, soumises éventuellement à un prérevenu comme indiqué aux tableaux 2 et 3, refroidies et vieillies naturellement à l'état T4.

On a mesuré les caractéristiques mécaniques : résistance à la rupture Rm (en MPa), limite d'élasticité conventionnelle à 0,2% R_{0,2} (en MPa) et allongement à la rupture

A (en %), à cet état T4, puis après traitement de cataphorèse de 20 mn à 190°C (état T6), ainsi que les caractéristiques mécaniques à 190°C au début de la cataphorèse après une montée en température à partir de la température ambiante de 6 mn, et à la fin du traitement.

Les résultats sont rassemblés aux tableaux 2 et 3.

**Tableau 2**

| (caractéristiques mécaniques à froid) | | | | | | | |
|---|---|---|---|---|---|---|---|
| | Prérevenu | Rₘ | R_{0,2} | A | Rₘ | R_{0,2} | A |
| Etat | | T4 | T4 | T4 | T6 | T6 | T6 |
| A | Oui | 201 | 97 | 24,6 | 246 | 170 | 12,0 |
| B | Oui | 241 | 126 | 24,7 | 288 | 201 | 17,3 |
| 6111 | Non | 314 | 179 | 25,3 | 318 | 212 | 18,1 |
| 6056 | Non | 303 | 146 | 27,6 | 355 | 247 | 15,5 |
| 6056 | Oui | 329 | 169 | 24,1 | 377 | 271 | 20,0 |

On constate qu'à l'état T4, l'alliage 6056 conduit à une résistance mécanique plus faible et un allongement plus grand que l'alliage 6111, ce qui améliore la formabilité à l'emboutissage des pièces. Après cuisson des peintures, la résistance mécanique est au contraire plus élevée, ce qui conduit à une meilleure résistance à l'indentation.

**Tableau 3**

| (caractéristiques mécaniques à 190°C) | | | | | | | |
|---|---|---|---|---|---|---|---|
| | prérevenu | Rm | R_{0,2} | A | Rₘ | R_{0,2} | A |
| | Début cataphorèse | | | | Fin cataphorèse | | |
| A | Oui | 150 | 100 | 27,0 | 167 | 129 | 26,1 |
| B | Oui | 181 | 128 | 30,4 | 196 | 153 | 30,4 |
| 6111 | Non | 241 | 159 | 21,6 | 253 | 191 | 21,5 |
| 6056 | Non | 262 | 168 | 23,7 | 280 | 223 | 23,6 |

On constate que l'alliage 6056 conduit à une meilleure résistance mécanique à 190°C aussi bien au début qu'à la fin du traitement de cataphorèse, avec notamment une augmentation de 16% de la limite d'élasticité.

### Exemple 2

On a coulé en plaques d'épaisseur 500 mm 4 alliages représentant un alliage A1 proche d'un alliage de type 6016, un alliage A2 du même type mais plus chargé en cuivre, un alliage de type 6111 et un alliage 6056 pour fabriquer des pièces selon l'invention. Les compositions en % en poids sont indiquées au tableau 4 :

**Tableau 4**

| | Si | Fe | Cu | Mn | Mg | Cr | Zn | L max |
|---|---|---|---|---|---|---|---|---|
| A1 | 0,8 | 0,28 | 0,18 | 0,17 | 0,54 | 0,03 | - | 5,67 |
| A2 | 0,8 | 0,28 | 0,52 | 0,17 | 0,53 | 0,04 | - | 9,67 |
| 6111 | 0,6 | 0,11 | 0,69 | 0,17 | 0,78 | 0,07 | 0,04 | 8,33 |
| 6056 | 0,8 | 0,08 | 1,01 | 0,43 | 0,75 | 0,002 | 0,15 | 8,50 |

Les plaques ont été transformées en tôles d'épaisseur 1 mm dans les mêmes conditions que celles de l'exemple 1, y compris l'enduction d'une couche de cataphorèse de 20 µm et la cuisson de cette couche à 190°C pendant 20 mn. On a effectué sur des échantillons de ces tôles un test de corrosion filiforme selon la norme EN 3665 , le résultat (en mm) indiqué au tableau 4 étant la moyenne des longueurs maximales de filaments de corrosion filiforme observés.

On constate que l'addition de 0,3% de cuivre à un alliage 6016 conduit à une détérioration de la résistance à la corrosion filiforme. On aurait pu penser que la même augmentation de la teneur en cuivre du 6056 par rapport au 6111 conduirait à une détérioration identique. On constate au contraire que la résistance à la corrosion filiforme de ces deux alliages est pratiquement identique, ce qui peut s'expliquer par un effet favorable du zinc.

### Exemple 3

On a coulé en plaques d'épaisseur 500 mm 3 alliages dont un alliage de type 6016, un alliage de type 6111 et un alliage 6056 pour fabriquer des pièces selon l'invention. Les compositions des alliages sont indiquées au tableau 5 :

**Tableau 5**

| | Si | Fe | Cu | Mn | Mg | Cr | Zn |
|---|---|---|---|---|---|---|---|
| 6016 | 1,00 | 0,30 | 0,13 | 0,12 | 0,30 | 0,03 | - |
| 6111 | 0,63 | 0,11 | 0,69 | 0,17 | 0,78 | 0,07 | - |
| 6056 | 0,81 | 0,13 | 0,97 | 0,46 | 0,76 | 0,01 | 0,13 |

Les plaques ont été scalpées, homogénéisées 10 h à 570°C, puis laminées à chaud directement sur chaleur d'homogénéisation, d'abord sur un laminoir réversible, puis sur un laminoir tandem. La température de début de laminage était de l'ordre de 540°C, la température de bobinage de la bande à chaud de l'ordre de 340°C. Les bandes ont été ensuite laminées à froid jusqu'à l'épaisseur de 1 mm avec un traitement de surface EDT. A titre de comparaison, certains cas on subit un recuit intermédiaire, d'autres non, comme indiqué au tableau 6. Puis les bandes ont été mises en solution à une température supérieure à 540°C, refroidies et vieillies naturellement à l'état T4.

Les échantillons ont été tractionnés dans le sens travers jusqu'à un allongement permanent de 15% de manière à faire apparaître le lignage. On a mesuré, à l'aide d'un rugosimètre mécanique la rugosité Rₐ (en µm) d'un profil moyen dans le sens travers (« Rₐ profil »). Il s'agit d'un dépouillement spécifique de rugosité 3D. Un niveau de Rₐ profil inférieur à 0.30-0.35 est considéré généralement comme compatible avec les pièces de peau. Les résultats, qui sont les moyennes de plusieurs échantillons, sont reportés au tableau 6.

**Tableau 6**

| Alliage | Recuit intermédiaire | Rₐ profil moyen (µm) |
|---|---|---|
| 6016 | Oui | 0,240 |
| 6016 | Non | 0,550 |
| 6111 | Non | 0,417 |
| 6056 | Oui | 0,176 |
| 6056 | Non | 0,260 |

On constate que les tôles en alliage 6056 ont une tendance au lignage plus faible que celles en 6016 ou en 6111. D'autre part, un recuit intermédiaire lors du laminage à froid a une influence favorable sur la réduction du lignage. Avec ce type de gamme de fabrication et en l'absence de recuit intermédiaire, seul l'alliage 6056 serait acceptable pour une application peau de carrosserie.

### Exemple 4

On a comparé la formabilité de tôles d'épaisseur 1,2 mm à l'état T4 en alliage B de type 6016 et 6056, avec les compositions mentionnées au tableau 1, traitées par EDT en utilisant le paramètre LDH. Le paramètre LDH (Limiting Dome Height) est largement utilisé pour l'évaluation de l'emboutissabilité des tôles d'épaisseur 0,5 à 2 mm. Il a fait l'objet de nombreuses publications, notamment celle de R. Thompson, "The LDH test to evaluate sheet metal formabiblity - Final Report of the LDH Committee of the North American Deep Drawing Research Group", SAE conference, Detroit, 1993, SAE Paper n° 930815.

L'essai LDH est un essai d'emboutissage à flan bloqué en périphérie par un jonc. La pression de serre-flan est contrôlée pour éviter un glissement dans le jonc.. Les flans, de taille 120 x 160 mm, sont sollicités dans un mode proche de la déformation plane (ST ou SL). Des flans de taille 160 x 160 mm sont utilisés pour obtenir un mode de déformation équibiaxiée. La lubrification entre le poinçon et la tôle est assurée par un film plastique et de la graisse (graisse Shell HDM2). La vitesse de descente du poinçon est de 50 mm/mn. La valeur LDH est le déplacement du poinçon à rupture, soit la profondeur limite de l'emboutissage. On établit la moyenne entre trois essais, donnant un intervalle de confiance à 95% sur la mesure de ± 0,3 mm.

Les résultats sont indiqués au tableau 7 :

**Tableau 7**

| Alliage | R_{0,2} (MPa) | LDH (mm) déformation equibiaxiée | LDH (mm) Déformation plane SL | LDH (mm) Déformation plane ST |
|---|---|---|---|---|
| B | 100 | 32,7 | 27,4 | 26,3 |
| 6056 | 150 | 32,2 | 26,7 | 26,6 |

On constate que l'alliage 6056, bien que beaucoup plus dur que le 6016, présente une formabilité à l'emboutissage pratiquement équivalente à celle du 6016.

### Exemple 5

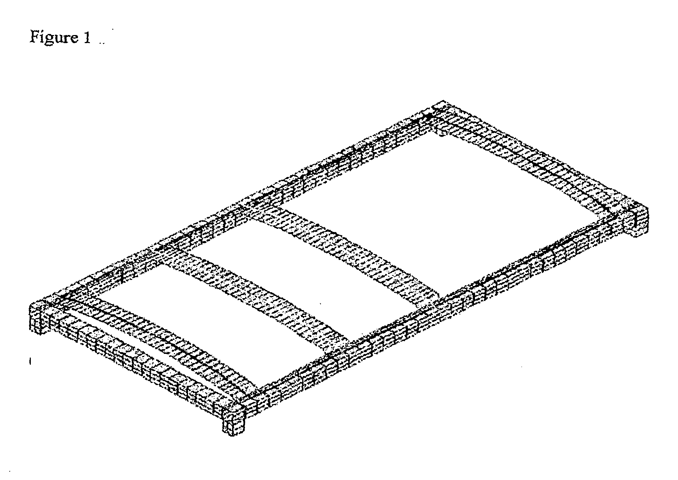

La déformation après cataphorèse est mesurée à partir d'un montage d'une pièce en alliage d'aluminium sur un cadre acier et mesure des déformations induites. La pièce en alliage d'aluminium, simulant un pavillon de toit de voiture, est une tôle de longueur 1630 mm, de largeur 930 mm et d'épaisseur 1,2 mm, galbée avec une flèche de 30 mm. Le cadre en acier, représenté à la figure 1 et simulant une caisse de voiture, est réalisé en tubes d'acier de section carrée 50 x 50 mm et d'épaisseur 3mm.

Il comprend, en plus du cadre de mêmes dimensions que le pavillon, 4 traverses de largeur 100 mm et d'épaisseur 3 mm : une traverse avant, une traverse arrière et deux traverses intermédiaires. L'assemblage de la tôle sur le cadre se fait par 17 rivets espacés de 100 mm de chaque côté, 11 rivets espacés de 75 mm sur la traverse avant et sur la traverse arrière.

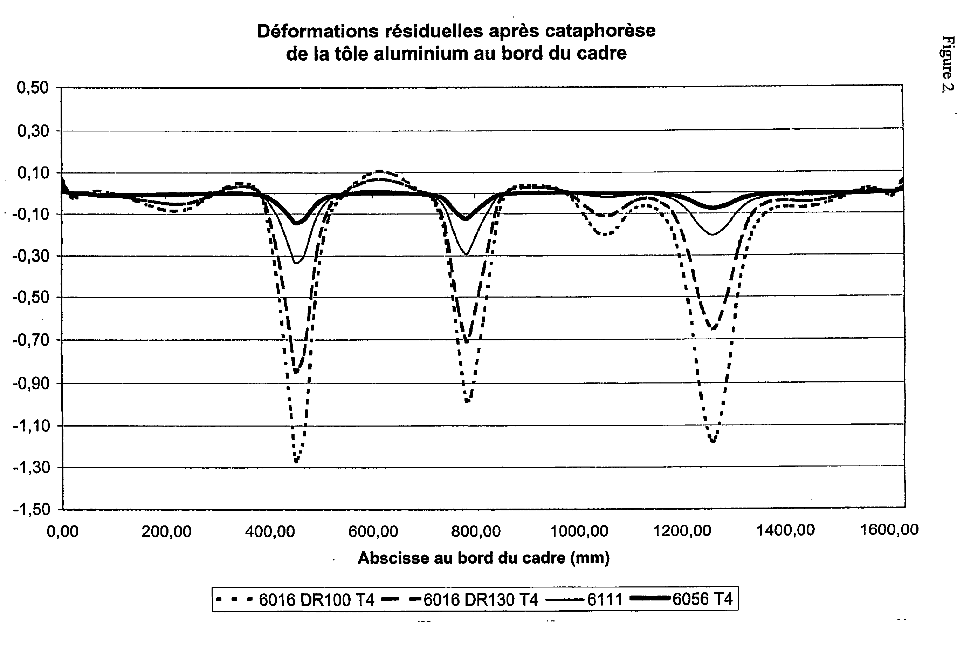

L'ensemble a été soumis à une température de 195°C pendant 30 mn. On enregistre les déformations du métal selon l'axe du véhicule après retour à la température ambiante. On a fait l'essai pour des tôles dans chacun des 4 alliages essayés à l'exemple 1. Les courbes longitudinales de déformation sont représentées à la figure 2. On constate que l'amplitude des plis est la plus faible pour la tôle en 6056.

## Revendications

1. Pavillon de toit de carrosserie d'automobile comportant au moins un cadre en acier et une pièce de peau en alliage d'aluminium fixée sur la pièce en acier avant peinture, **caractérisé en ce que** la pièce en aluminium est réalisée à partir d'une tôle traitée par mise en solution, trempe et maturation à la température ambiante de compositions :
Si : 0,7 -1,3 Fe < 0,5 Cu : 0,8 -1,1 Mn : 0,4 -1,0 Mg : 0,6 -1,2 Zn : < 0,7 Cr < 0,25 Zr + Ti < 0,20 autres éléments < 0,05 chacun et < 0,15 au total, reste aluminium,
présentant après mise en solution, trempe et maturation de 3 semaines à température ambiante, une limite d'élasticité R_{0,2} inférieure à 170 MPa, et de préférence à 160 MPa, et une limite d'élasticité à chaud, au début du traitement thermique de cuisson des peintures (après montée en température), de la pièce de peau supérieure à 160 MPa.

2. Pavillon de toit selon la revendication 1, **caractérisé en ce que** la limite d'élasticité à chaud, à la fin du traitement thermique de cuisson des peintures, de la pièce de peau est supérieure à 200 MPa.

3. Pavillon de toit selon l'une des revendications 1 ou 2, **caractérisé en ce que** la limite d'élasticité à froid, après cuisson des peintures, de la pièce de peau est supérieure à 220 MPa.

4. Pavillon de toit selon l'une des revendications 1 à 3, **caractérisé en ce que** l'alliage de la pièce de peau contient de 0,7 à 1% Si.

5. Pavillon de toit selon l'une des revendications 1 à 4 **caractérisé en ce que** l'alliage de la pièce de peau contient de 0,45 à 0,6% Mn.

6. Pavillon de toit selon l'une des revendications 1 à 5, **caractérisé en ce que** l'alliage de la pièce de peau contient de 0,6 à 0,9% Mg.

7. Pavillon de toit selon l'une des revendications 1 à 6, **caractérisé en ce que** l'alliage de la pièce de peau contient de 0,1 à 0,7% Zn.

8. Pavillon de toit selon la revendication 7, **caractérisé en ce que** l'alliage de la pièce de peau contient de 0,15 à 0,3% Zn.

## Claims

1. Auto body roof comprising at least one steel frame and a skin part made of an aluminium alloy attached to the steel part before painting, **characterised in that** the aluminium part is made from a sheet treated by solution, quenching and age-hardening at room temperature, with the following composition: Si: 0.7-1.3, Fe < 0.5, Cu: 0.8-1.1, Mn: 0.4-1.0, Mg: 0.6.-1.2, Zn < 0.7, Cr < 0.25, Zr+Ti < 0.20, other elements < 0.05 each and < 0.15 total, remainder aluminium,
having, after solution treatment, quenching and age-hardening for three weeks at room temperature, a yield strength R_{0,2} of less than 170 MPa, and preferably 160 MPa,
and a high temperature yield strength, at the beginning of the paint baking heat treatment (after the temperature rise), greater than 160 MPa.

2. Body roof according to claim 1, **characterised in that** its high temperature yield strength, at the end of the paint baking heat treatment, of the skin part is greater than 200 MPa.

3. Body roof according to one of claims 1 or 2, **characterised in that** its low temperature yield strength, after paint baking, of the skin part is greater than 220 MPa.

4. Body roof according to one of claims 1 to 3, **characterised in that** the alloy of the skin part contains 0.7 to 1% Si.

5. Body roof according to one of claims 1 to 4, **characterised in that** the alloy of the skin part contains 0.45 to 0.6% Mn.

6. Body roof according to one of claims 1 to 5, **characterised in that** the alloy of the skin part contains 0.6 to 0.9% Mg.

7. Body roof according to one of claims 1 to 6, **characterised in that** the alloy of the skin part contains 0.1 to 0.7% Zn.

8. Body roof according to claim 7, **characterised in that** the alloy of the skin part contains 0.15 to 0.3% Zn.

## Patentansprüche

1. Dach einer Kraftfahrzeugkarosserie, bestehend aus mindestens einem Stahlrahmen und einem Hautteil aus Aluminiumlegierung, das vor Lackierung an dem Stahlteil befestigt wird, **dadurch gekennzeichnet, dass** das Aluminiumteil aus einem durch Lösungsglühen, Abschrecken und Kaltauslagern bei Raumtemperatur behandelten Blech folgender Zusammensetzung hergestellt ist:
Si : 0,7-1,3 Fe < 0,5 Cu : 0,8-1,1 Mn : 0,4-1,0 Mg : 0,6-1,2 Zn < 0,7 Cr < 0,25 Zr + Ti < 0,20,
weitere Elemente jeweils < 0,05 und insgesamt < 0,15, Rest Aluminium,
nach Lösungsglühen, Abschrecken und 3-wöchigem Kaltauslagern bei Raumtemperatur eine Dehngrenze R_{0,2} von weniger als 170 MPa, vorzugsweise weniger als 160 MPa, und eine Warmdehngrenze zu Beginn der Wärmebehandlung zum Einbrennen der Lacke (nach Aufheizen) von mehr als 160 MPa aufweist.

2. Dach nach Anspruch 1, **dadurch gekennzeichnet, dass** die Warmdehngrenze des Hautteils am Ende der Wärmebehandlung zum Einbrennen der Lacke mehr als 200 MPa beträgt.

3. Dach nach einem der Ansprüche 1 oder 2, **dadurch gekennzeichnet, dass** die Kaltdehngrenze des Hautteils nach Einbrennen der Lacke mehr als 220 MPa beträgt.

4. Dach nach einem der Ansprüche 1 bis 3, **dadurch gekennzeichnet, dass** die Legierung des Hautteils 0,7 bis 1 % Si enthält.

5. Dach nach einem der Ansprüche 1 bis 4, **dadurch gekennzeichnet, dass** die Legierung des Hautteils 0,45 bis 0,6 % Mn enthält.

6. Dach nach einem der Ansprüche 1 bis 5, **dadurch gekennzeichnet, dass** die Legierung des Hautteils 0,6 bis 0,9 % Mg enthält.

7. Dach nach einem der Ansprüche 1 bis 6, **dadurch gekennzeichnet, dass** die Legierung des Hautteils 0,1 bis 0,7 % Zn enthält.

8. Dach nach Anspruch 7, **dadurch gekennzeichnet, dass** die Legierung des Hautteils 0,15 bis 0,3 % Zn enthält.
